# FASCICULE DE BREVET EUROPEEN

(11) **EP 1 765 624 B1**
(45) Date de publication et mention de la délivrance du brevet: **23.04.2014**
(21) Numéro de dépôt: 05778096.7
(22) Date de dépôt: 20.06.2005
(51) Int. Cl.: B60J 7/043

(54) **OUVRANT DE VEHICULE AUTOMOBILE, ET VEHICULE POURVU D'UN TEL OUVRANT**
ÖFFNUNGSABDECKUNG EINES KRAFTFAHRZEUGS, UND FAHRZEUG MIT EINER SOLCHEN ÖFFNUNGSABDECKUNG
MOTOR VEHICLE OPENING FRAME AND MOTOR VEHICLE EQUIPPED WITH SAME

(30) Priorité: 25.06.2004 FR 0407001
(43) Date de publication de la demande: 28.03.2007
(73) Titulaire: RENAULT S.A.S., 92100 Boulogne Billancourt (FR)
(72) Inventeur: LEROYER, Bruno, F-78910 ORGERUS (FR)
(86) Numéro de dépôt international: PCT/FR2005/050466
(87) Numéro de publication internationale: WO 2006/010870

(56) Documents cités:
- DE-U- 8 514 459
- FR-A- 2 695 596
- GB-A- 329 171

## Description

L'invention concerne un ouvrant de véhicule automobile obturant une ouverture et pourvu d'un mécanisme d'ouverture, et un véhicule pourvu d'un tel ouvrant.

Les ouvrants de pavillon classiques des véhicules automobiles sont montés sur quatre chariots circulant sur deux rails longitudinaux ménagés sur la surface supérieure du pavillon. L'ouvrant peut alors coulisser et être déplacé au dessus de la partie fixe du pavillon, permettant ainsi de libérer une large ouverture. En raison des quatre chariots nécessaires, cette solution est toutefois relativement complexe et coûteuse.

Un ouvrant sur deux chariots est décrit dans le document FR 2 695 596.

Certains véhicules utilitaires comprennent un ouvrant à l'arrière du pavillon, à proximité de la porte battante arrière. Cet ouvrant, encore appelé girafon, forme en position fermée une partie du pavillon du véhicule et éventuellement le haut de la paroi transversale arrière du véhicule. Il est articulé sur le pavillon de manière à pouvoir tourner autour d'un axe transversal au véhicule, et est maintenu en position ouverte par une barrette de soutien avec un cran ou une barrette de soutien télescopique dont une extrémité est solidaire de la structure du véhicule. L'ouverture obtenue est toutefois peu importante, le girafon étant maintenu ouvert dans une position entrebâillée, de sorte qu'il reste en permanence sensiblement à la verticale d'une majeure partie de l'ouverture ménagée. Il n'est donc pas possible de placer sur le plancher des objets longs et épais qui dépassent sensiblement du véhicule pour être stockés dans ce dernier, l'entrebâillement de girafon ne permettant qu'une ouverture assez étroite.

L'invention vise à pallier ces inconvénients en proposant un ouvrant de pavillon pourvu d'un mécanisme d'ouverture simple, facile à manipuler, et peu coûteux. L'ouvrant selon l'invention permet également de dégager suffisamment l'ouverture pour pouvoir faire passer par celle-ci un objet posé verticalement sur le plancher du véhicule.

A cet effet, l'objet de l'invention concerne un ouvrant de véhicule automobile destiné à obturer une ouverture du pavillon du véhicule et pourvu d'un mécanisme d'ouverture apte à le déplacer entre une position fermée dans laquelle il obture complètement l'ouverture, et une position ouverte dans laquelle il libère au moins partiellement le dessus de l'ouverture, caractérisé en ce que le mécanisme d'ouverture comprend :
- une bielle, dont une extrémité est articulée à une extrémité du bord latéral longitudinal de l'ouvrant, et dont l'autre extrémité est destinée à être articulée au véhicule à proximité d'un bord latéral longitudinal de l'ouverture, du même côté du véhicule, la bielle étant mobile dans un plan longitudinal vertical du véhicule de manière à déplacer l'ouvrant avec un débattement longitudinal entre les positions ouverte et fermée,
- des moyens de guidage en débattement longitudinal et vertical de l'ouvrant aptes à le guider avec un débattement longitudinal et vertical entre les positions ouverte et fermée, tel que précisé dans la revendication 1.

Avantageusement, le mécanisme d'ouverture de l'ouvrant comprend une deuxième bielle identique à la première, articulée de la même manière sur l'autre bord longitudinal de l'ouvrant, les axes d'articulation des deux bielles étant confondus. Cette configuration permet un meilleur équilibrage de l'ouvrant lors de son ouverture.

Avantageusement, la distance entre les axes d'articulations de la (des) bielle(s) est sensiblement égale à la moitié de la dimension de l'ouvrant suivant la direction longitudinale du véhicule. Ainsi, l'ouverture de l'ouvrant va libérer entièrement l'ouverture.

Dans un mode de réalisation particulier, les moyens de guidage en débattement longitudinal et vertical comprennent :
- deux chariots articulés sur les bords latéraux longitudinaux de l'ouvrant, à proximité de leur extrémité opposée à l'articulation de la bielle, et
- deux rails longitudinaux de guidage en translation des chariots destinés à être solidarisés au pavillon, s'étendant depuis le bord transversal de l'ouverture sur une longueur suffisante pour permettre le déplacement de l'ouvrant entre les positions fermée et ouverte.

Avantageusement, les extrémités des rails situées à proximité de l'ouverture sont inclinées vers l'intérieur du véhicule, en dessous du plan des rails, de manière à ce que l'ouvrant soit dans le prolongement du pavillon dans la position fermée.

L'invention concerne également un véhicule pourvu d'un ouvrant de pavillon tel que décrit précédemment, dans lequel l'ouvrant est placé à l'extrémité arrière du véhicule, son bord transversal dirigé vers l'arrière du véhicule étant adjacent au bord supérieur d'une paroi latérale transversale verticale ouvrante du véhicule, et dans lequel les moyens de guidage en débattement longitudinal et vertical sont placés du côté du bord transversal avant de l'ouverture du pavillon et de l'ouvrant, la (les) bielle(s) étant articulée(s) à l'extrémité de l'ouvrant dirigée vers l'arrière de sorte qu'un déplacement de l'ouvrant de l'arrière vers l'avant du véhicule libère l'accès à l'ouverture. Un tel ouvrant, utilisé par exemple dans un véhicule utilitaire, permet ainsi d'augmenter la capacité de charge de ce dernier, notamment en ouvrant les portes arrière du véhicule.

L'invention est maintenant décrite en référence aux dessins annexés, non limitatifs, dans lesquels :
- les figures 1 et 2 sont des vues en coupe longitudinale du mécanisme d'ouverture d'un ouvrant selon l'invention dans les positions fermée, et ouverte, respectivement,
- la figure 3 est un agrandissement de la figure 1,
- la figure 4 est une vue de dessus d'un véhicule pourvu d'un ouvrant selon l'invention, en position fermée.

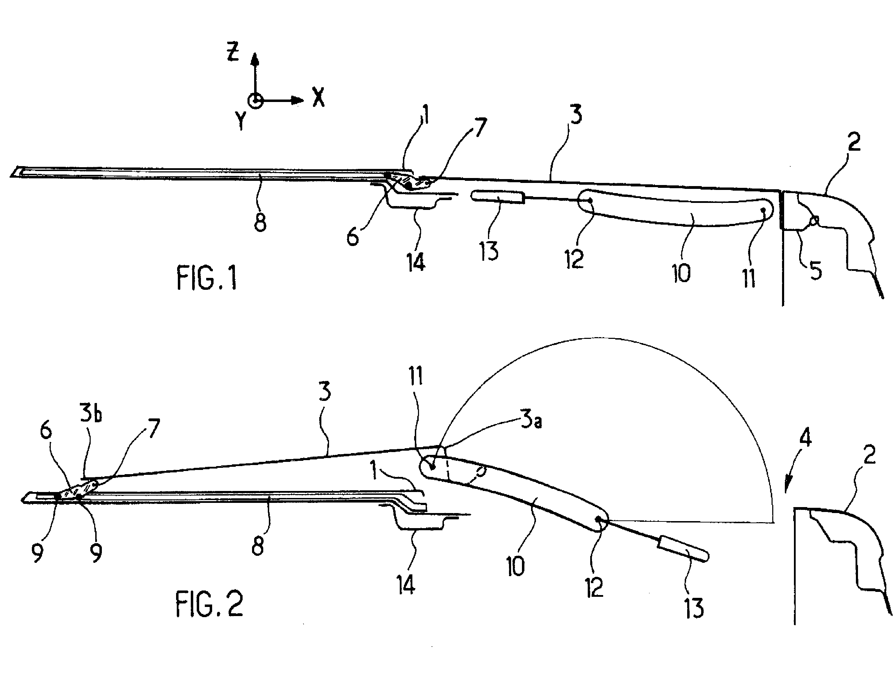

Sur les figures 1. 2 et 4, sont visibles le pavillon 1 d'un véhicule ainsi que la partie supérieure d'une porte battante arrière 2.

Dans la suite de la description, on définit par X, Y, Z les directions longitudinale, transversale et verticale du véhicule automobile. Sur les figures, la direction X est dirigée vers l'arrière du véhicule. Les termes avant et arrière se réfèrent à l'avant et l'arrière du véhicule respectivement.

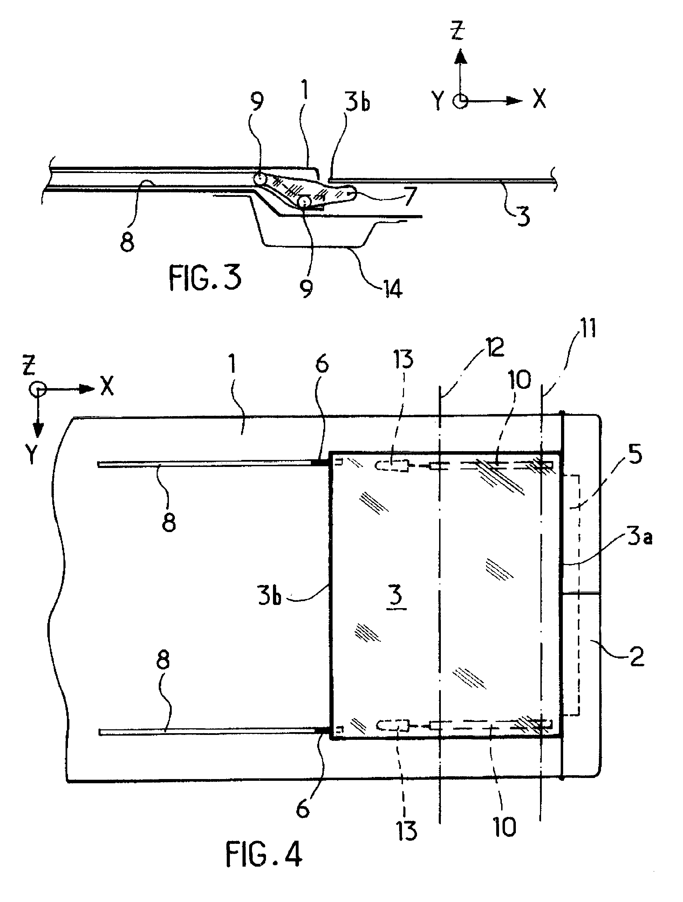

A proximité immédiate de la porte battante arrière 2, le pavillon est pourvu d'un ouvrant 3 qui obture une ouverture 4. Dans la position fermée représentée figures 1 et 4, l'ouvrant 3 s'étend dans la continuité du pavillon 1 au dessus de l'ouverture 4 qu'il obture complètement.

Le bord transversal 3a de l'ouvrant 3, dirigé vers l'arrière du véhicule, présente une patte 5 qui vient se glisser sous la partie supérieure de la porte battante arrière 2 en position fermée et assure ainsi un verrouillage de l'ouvrant en position fermée. Le bord transversal 3a est ainsi adjacent à la porte 2, de sorte que l'ouverture de l'ouvrant et de la porte procure une large ouverture vers l'arrière et le haut du véhicule.

A proximité de son bord transversal 3b dirigé vers l'avant du véhicule, l'ouvrant 3 est articulé à deux chariots 6. Ces chariots sont articulés autour d'un même axe transversal 7 à l'ouvrant et sont disposés sur les bords longitudinaux de ce dernier. Chaque chariot 6 coulisse dans un rail 8 solidaire de la face supérieure du pavillon 1. Chaque rail 8 s'étend dans la direction longitudinale du véhicule depuis le bord transversal de l'ouverture 4 situé du côté avant du véhicule, sur une distance sensiblement identique à la dimension de l'ouvrant dans la direction longitudinale, tel que représenté figure 4.

Lorsque que l'ouvrant 3 est en position fermée, les chariots 6 sont situés aux extrémités des rails 8, du côté du bord avant de l'ouverture. Ces extrémités de rail sont inclinées vers l'intérieur du véhicule, en dessous du plan des rails (figure 3), de manière à ce que l'ouvrant soit dans le prolongement du pavillon en position fermée, mais puisse passer au dessus du pavillon en position ouverte ou partiellement ouverte (figure 2).

A cet effet, chaque chariot 6 est en forme d'un triangle à deux angles aigus et un angle obtus. Les sommets de l'un des angles aigus et de l'angle obtus sont pourvus chacun d'un galet 9 ou similaire pouvant coulisser dans les rails 8, et le troisième sommet aigu porte l'axe 7 solidaire de l'ouvrant, sur la face de celui-ci dirigée vers l'habitacle du véhicule. Les chariots 6 sont disposés de manière à ce que l'axe 7 soit situé en permanence en arrière des deux galets 9 suivant la direction longitudinale. Ainsi, la hauteur du chariot 6 est faible lorsque les deux galets 9 sont dans un même plan horizontal (par exemple en position ouverte ou partiellement ouverte), et une faible inclinaison du rail 8 vers l'intérieur et l'arrière du véhicule permet d'abaisser l'axe transversal 7 et par conséquent l'ouvrant, suivant la direction Z.

Les chariots 6 et les rails 8 forment ainsi des moyens de guidage en débattement longitudinal et vertical de l'ouvrant aptes à le guider avec un débattement longitudinal et vertical entre ses positions fermée et ouverte.

Sur chacun de ses côtés longitudinaux, l'ouvrant 3 est articulé à l'extrémité d'une bielle 10 autour d'un axe 11 transversal au véhicule situé à proximité de son bord transversal arrière 3a. L'autre extrémité de la bielle 10 est articulée à la structure du véhicule autour d'un axe 12 également transversal au véhicule. Les axes d'articulation des deux bielles sont confondus (figure 4).

Chaque bielle 10 présente une distance d'axe à axe sensiblement égale à la moitié de la dimension de l'ouvrant suivant la direction longitudinale du véhicule et est articulée à l'ouvrant et à la structure du véhicule de manière à ce que, dans la position fermée, les axes d'articulation 11, 12 de la bielle soient disposés sensiblement dans un même plan horizontal, tel que visible sur la figure 1. Un accès maximal à l'ouverture 4 est alors possible en position ouverte (figure 2). Les bielles permettent ainsi un déplacement de l'ouvrant entre ses positions ouverte et fermée avec un débattement longitudinal.

Sensiblement dans le prolongement de la bielle, du côté opposé à l'axe 11 par rapport à l'axe transversal 12, chaque bielle est pourvue d'une poignée de manipulation 13. La manipulation de l'ouvrant est alors facile pour un utilisateur. En variante, une seule poignée peut être prévue sur l'une des bielles.

Un vérin ou deux vérins d'assistance à l'ouverture de l'ouvrant peuvent être reliés aux bielles et au véhicule, de manière similaire aux vérins utilisés pour l'ouverture des hayons de véhicule.

De préférence, pour un meilleur support, l'extrémité inclinée des rails 8, coïncidant sensiblement avec le bord avant de l'ouverture 4, se situe sensiblement au dessus d'une traverse 14 du véhicule supportant le pavillon (figures 1 à 3).

Un système de verrouillage de l'ouvrant en position ouverte peut également être prévu afin d'éviter sa fermeture intempestive lorsque le véhicule se déplace à grande vitesse. Il peut s'agir par exemple d'un système de blocage de la rotation des bielles.

De préférence, le bord transversal de l'ouvrant dirigé vers l'avant du véhicule peut être pourvu d'un joint et/ou les moyens de guidage en débattement longitudinal et vertical (par exemple par la forme de l'extrémité des rails dans l'exemple décrit) peuvent être conformés de manière à limiter, voire empêcher, le passage d'air entre le pavillon et l'ouvrant dans la position ouverte. La génération de bruit dû au refoulage de l'air est ainsi réduite dans cette position. L'ouvrant peut par exemple être pourvu d'un joint (non représenté) venant en contact avec le pavillon en position ouverte. Afin de faciliter ce contact, les extrémités avant des rails peuvent également être situées en dessous du niveau du reste des rails, sous le pavillon, afin d'abaisser le bord transversal de l'ouvrant en position ouverte (non représenté).

Les bords de l'ouvrant 3 et/ou ceux de l'ouverture 4 peuvent être pourvus de joints afin d'assurer l'étanchéité en position fermée de l'ouvrant.

L'ouverture de l'ouvrant 3 est réalisée de la manière suivante. La patte de verrouillage 5 est débloquée en ouvrant la porte battante arrière 2. Les poignées 13 des bielles 10 sont ensuite tirées vers le plancher du véhicule, provoquant la rotation de chacune des bielles autour de l'axe 12, l'axe 11 décrivant un arc de cercle vers l'avant du véhicule entraînant le coulissement des chariots 6 dans les rails 8 vers l'avant du véhicule (figure 2). En position complètement ouverte, la bielle 10 est en contact avec le bord transversal avant de l'ouverture, l'ouvrant s'étendant sensiblement horizontalement, ou avec une faible inclinaison, au dessus du pavillon 1 et dégageant quasiment totalement le dessus de l'ouverture 4.

Le mécanisme d'ouverture présente ainsi l'avantage de dégager totalement le dessus de l'ouverture formée, même si cette dernière est réduite, par exemple lorsque la distance axe à axe des bielles est inférieure à la moitié de la longueur de l'ouvrant.

Bien entendu, l'ouvrant peut être monté de manière à s'ouvrir non plus vers l'avant du véhicule, mais vers l'arrière du véhicule. L'ouverture 4 est alors plus éloignée de la paroi transversale arrière du véhicule. On peut également prévoir une seule bielle d'un seul côté de l'ouvrant lorsque la structure de ce dernier le permet.

D'autres moyens de guidage en débattement longitudinal et vertical que des rails ou des chariots peuvent être envisagés afin d'assurer le guidage longitudinal et vertical de l'ouvrant lors de son ouverture.

Enfin, d'autres modes de réalisation des chariots et rails peuvent être prévus permettant d'obtenir, ou non, le positionnement de l'ouvrant dans le prolongement du pavillon du véhicule.

## Revendications

1. Ouvrant (3) de véhicule automobile, destiné à obturer une ouverture (4) du pavillon (1) du véhicule, et pourvu d'un mécanisme d'ouverture apte à le déplacer entre une position fermée dans laquelle il obture complètement l'ouverture, et une position ouverte dans laquelle il libère au moins partiellement le dessus de l'ouverture, **caractérisé en ce que** le mécanisme d'ouverture comprend :
- une bielle (10), dont une extrémité est articulée à une extrémité du bord latéral longitudinal de l'ouvrant, et dont l'autre extrémité est destinée à être articulée au véhicule à proximité d'un bord latéral longitudinal de l'ouverture, du même côté du véhicule, la bielle étant mobile dans un plan longitudinal vertical du véhicule de manière à déplacer l'ouvrant avec un débattement longitudinal entre les positions ouverte et fermée,
- des moyens de guidage en débattement longitudinal et vertical de l'ouvrant aptes à le guider avec un débattement longitudinal et vertical entre les positions ouverte et fermée comprenant :
- deux chariots (6) articulés sur les bords latéraux longitudinaux de l'ouvrant autour d'un même axe transversal (7), à proximité de leur extrémité opposée à l'articulation de la bielle, et
- deux rails longitudinaux (8) de guidage en translation des chariots destinés à être solidarisés au pavillon, s'étendant depuis le bord transversal de l'ouverture (4) sur une longueur suffisante pour permettre le déplacement de l'ouvrant entre les positions fermée et ouverte, les extrémités des rails situées à proximité de l'ouverture étant inclinées vers l'intérieur du véhicule, en dessous du plan des rails, de manière à ce que l'ouvrant soit dans le prolongement du pavillon dans la position fermée.
et dans lequel chaque chariot (6) est en forme d'un triangle à deux angles aigus et un angle obtus, les sommets de l'un des angles aigus et de l'angle obtus étant pourvus chacun d'un galet (9) pouvant coulisser dans les rails (8), et le troisième sommet aigu portant l'axe (7) solidaire de l'ouvrant, sur la face de celui-ci dirigée vers l'habitacle du véhicule, les chariots (6) étant disposés de manière à ce que l'axe (7) soit situé en permanence en arrière des deux galets (9) suivant la direction longitudinale.

2. Ouvrant selon la revendication 1, **caractérisé en ce que** le mécanisme d'ouverture comprend une deuxième bielle (10) identique à la première, articulée de la même manière sur l'autre bord longitudinal de l'ouvrant, les axes d'articulation des deux bielles étant confondus.

3. Ouvrant selon la revendication 1 ou 2, **caractérisé en ce que** la distance entre les axes d'articulations (11, 12) de la (des) bielle(s) est sensiblement égale à la moitié de la dimension de l'ouvrant suivant la direction longitudinale du véhicule.

4. Ouvrant selon l'une des revendications 1 à 3, **caractérisé en ce que** le bord transversal de l'ouvrant dirigé vers l'avant du véhicule peut être pourvu d'un joint et/ou les moyens de guidage en débattement longitudinal et vertical peuvent être conformés de manière à limiter, voire empêcher, le passage d'air entre le pavillon et l'ouvrant dans sa position ouverte.

5. Ouvrant selon l'une des revendications 1 à 4, **caractérisé en ce que** la bielle (10), ou au moins une des bielles (10), est pourvue d'une poignée de manipulation (13) rigidement liée à proximité de son extrémité articulée au véhicule, du côté opposé de cette articulation par rapport à son extrémité articulée à l'ouvrant.

6. Ouvrant selon l'une des revendications 1 à 5, **caractérisé en ce qu'**il est pourvu d'au moins un vérin d'assistance à l'ouverture relié à la bielle ou à au moins une des bielles.

7. Ouvrant selon l'une des revendications 1 à 6, **caractérisé en ce qu'**il est pourvu d'un système de verrouillage en position ouverte de l'ouvrant.

8. Véhicule **caractérisé en ce qu'**il est pourvu d'un ouvrant selon l'une des revendications 1 à 7, dans lequel l'ouvrant (3) est placé à l'extrémité arrière du véhicule, son bord transversal dirigé vers l'arrière du véhicule étant adjacent au bord supérieur d'une paroi latérale transversale verticale ouvrante (2) du véhicule, et dans lequel les moyens de guidage en débattement longitudinal et vertical sont placés du côté du bord transversal avant de l'ouverture du pavillon et de l'ouvrant, la (les) bielle(s) (10) étant articulée(s) à l'extrémité de l'ouvrant (3) dirigée vers l'arrière de sorte qu'un déplacement de l'ouvrant de l'arrière vers l'avant du véhicule libère l'accès à l'ouverture (4).

## Patentansprüche

1. Kraftfahrzeug-Öffnungselement (3), das dazu bestimmt ist, eine Öffnung (4) des Verdecks (1) des Fahrzeugs zu verschließen, und das mit einem Öffnungsmechanismus versehen ist, der es zwischen einer geschlossenen Stellung, in der es die Öffnung vollständig verschließt, und einer offenen Stellung verschieben kann, in der es die Oberseite der Öffnung zumindest teilweise freilegt, **dadurch gekennzeichnet, dass** der Öffnungsmechanismus enthält:
- eine Schubstange (10), von der ein Ende an ein Ende des Längsseitenrands des Öffnungselements angelenkt ist, und deren anderes Ende dazu bestimmt ist, an das Fahrzeug in der Nähe eines Längsseitenrands der Öffnung auf der gleichen Seite des Fahrzeugs angelenkt zu werden, wobei die Schubstange in einer senkrechten Längsebene des Fahrzeugs beweglich ist, um das Öffnungselement mit einem Längsausschlag zwischen der offenen und der geschlossenen Stellung zu verschieben,
- Führungseinrichtungen des Öffnungselements im Längs- und Vertikalausschlag, die es mit einem Längs- und Vertikalausschlag zwischen der offenen und der geschlossenen Stellung führen können und enthalten:
- zwei Schlitten (6), die an die Längsseitenränder des Öffnungselements um die gleiche Querachse (7) in der Nähe ihres dem Gelenk der Schubstange entgegengesetzten Endes angelenkt sind, und
- zwei zur festen Verbindung mit dem Verdeck bestimmte Längsschienen (8) zur Translationsführung der Schlitten, die sich ausgehend vom Querrand der Öffnung (4) über eine ausreichende Länge erstrecken, um die Verschiebung des Öffnungselements zwischen der geschlossenen und der offenen Stellung zu ermöglichen, wobei die in der Nähe der Öffnung befindlichen Enden der Schienen zur Innenseite des Fahrzeugs unter die Ebene der Schienen geneigt sind, damit das Öffnungselement sich in der geschlossenen Stellung in der Verlängerung des Verdecks befindet,
und wobei jeder Schlitten (6) die Form eines Dreiecks mit zwei spitzen Winkeln und einem stumpfen Winkel hat, wobei die Scheitel des einen der spitzen Winkel und des stumpfen Winkels je mit einer Rolle (9) versehen sind, die in den Schienen (8) gleiten kann, und der dritte spitze Scheitel die fest mit dem Öffnungselement verbundene Achse (7) auf dessen zum Innenraum des Fahrzeugs gerichteten Seite trägt, wobei die Schlitten (6) so angeordnet sind, dass die Achse (7) sich permanent hinter den zwei Rollen (9) in Längsrichtung befindet.

2. Öffnungselement nach Anspruch 1, **dadurch gekennzeichnet, dass** der Öffnungsmechanismus eine zweite Schubstange (10) gleich der ersten enthält, die in gleicher Weise an den anderen Längsrand des Öffnungselements angelenkt ist, wobei die Gelenkachsen der zwei Schubstangen zusammenfallen.

3. Öffnungselement nach Anspruch 1 oder 2, **dadurch gekennzeichnet, dass** der Abstand zwischen den Gelenkachsen (11, 12) der Schubstange(n) im Wesentlichen gleiche der Hälfte der Abmessung des Öffnungselements in Längsrichtung des Fahrzeugs ist.

4. Öffnungselement nach einem der Ansprüche 1 bis 3, **dadurch gekennzeichnet, dass** der zur Vorderseite des Fahrzeugs gerichtete Querrand des Öffnungselements mit einer Dichtung versehen sein kann und/oder die Führungseinrichtungen im Längs- und Vertikalausschlag so gestaltet sein können, dass sie den Durchgang von Luft zwischen dem Verdeck und dem Öffnungselement in seiner offenen Stellung begrenzen oder sogar verhindern.

5. Öffnungselement nach einem der Ansprüche 1 bis 4, **dadurch gekennzeichnet, dass** die Schubstange (10), oder mindestens eine der Schubstangen (10), mit einem Bedienungsgriff (13) versehen ist, der starr in der Nähe ihres an das Fahrzeug angelenkten Endes auf der entgegengesetzten Seite dieses Gelenks bezüglich ihres an das Öffnungselement angelenkten Endes verbunden ist.

6. Öffnungselement nach einem der Ansprüche 1 bis 5, **dadurch gekennzeichnet, dass** es mit mindestens einem Öffnungshilfezylinder versehen ist, der mit der Schubstange oder mit mindestens einer der Schubstangen verbunden ist.

7. Öffnungselement nach einem der Ansprüche 1 bis 6, **dadurch gekennzeichnet, dass** es mit einem System zur Verriegelung des Öffnungselements in der offenen Stellung versehen ist.

8. Fahrzeug, **dadurch gekennzeichnet, dass** es mit einem Öffnungselement nach einem der Ansprüche 1 bis 7 versehen ist, wobei das Öffnungselement (3) am hinteren Ende des Fahrzeugs platziert ist, wobei sein zur Rückseite des Fahrzeugs gerichteter Querrand dem oberen Rand einer sich öffnenden senkrechten Querseitenwand (2) des Fahrzeugs benachbart ist, und wobei die Führungseinrichtungen des Längs- und Vertikalausschlags auf der Seite des vorderen Querrands der Öffnung des Verdecks und des Öffnungselements platziert sind, wobei die Schubstange(n) (10) an das nach hinten gerichtete Ende des Öffnungselements (3) angelenkt ist(sind), so dass eine Verschiebung des Öffnungselements von der Vorder- zur Rückseite des Fahrzeugs den Zugang zur Öffnung (4) freilegt.

## Claims

1. Motor vehicle opening element (3) designed to close off an opening (4) of the vehicle roof (1), and provided with an opening mechanism able to move it between a closed position in which it completely closes off the opening, and an open position in which it at least partially vacates the top of the opening, **characterized in that** the opening mechanism comprises:
- a connecting rod (10) whereof one end is articulated on one end of the longitudinal side edge of the opening element, and whereof the other end is designed to be articulated on the vehicle close to a longitudinal side edge of the opening, on the same side of the vehicle, the connecting rod being movable in a longitudinal vertical plane of the vehicle so as to move the opening element with a longitudinal movement between the open and closed positions and
- means for guiding the opening element in longitudinal and vertical movement that are able to guide it with a longitudinal and vertical movement between the open and closed positions and comprise:
- two carriages (6) articulated on the longitudinal side edges of the opening element about one and the same transverse shaft (7), close to their end opposite to the articulation of the connecting rod, and
- two longitudinal rails (8) for guiding the carriages in translation that are designed to be fixedly attached to the roof, extending from the transverse edge of the opening (4) over a sufficient length to allow the opening element to move between the closed and open positions, the ends of the rails situated close to the opening being inclined toward the inside of the vehicle, beneath the plane of the rails, so that the opening element, in the closed position, is in the extension of the roof, and in which each carriage (6) is in the shape of a triangle with two acute angles and one obtuse angle, the apexes of one of the acute angles and of the obtuse angle being each provided with a roller (9) or similar element that can slide in the rails (8), and the third acute apex carrying the shaft (7) fixedly attached to the opening element, on the face of the latter directed toward the passenger compartment of the vehicle, the carriages (6) being placed so that the shaft (7) is permanently situated behind the two rollers (9) in the longitudinal direction.

2. Opening element according to Claim 1, **characterized in that** the opening mechanism comprises a second connecting rod (10) identical to the first, articulated in the same manner on the other longitudinal edge of the opening element, the articulation shafts of the two connecting rods being one and the same.

3. Opening element according to Claim 1 or 2, **characterized in that** the distance between the articulation shafts (11, 12) of the connecting rod(s) is substantially equal to half the dimension of the opening element in the longitudinal direction of the vehicle.

4. Opening element according to one of Claims 1 to 3, **characterized in that** the transverse edge of the opening element directed toward the front of the vehicle may be provided with a seal and/or the means for guiding in longitudinal and vertical movement may be shaped so as to limit, or even prevent, the passage of air between the roof and the opening element in its open position.

5. Opening element according to one of Claims 1 to 4, **characterized in that** the connecting rod (10) or at least one of the connecting rods (10), is provided with a rigidly connected operating handle (13) close to its end articulated on the vehicle, on the opposite side of this articulation relative to its end articulated on the opening element.

6. Opening element according to one of Claims 1 to 5, **characterized in that** it is provided with at least one opening assister cylinder connected to the connecting rod or to at least one of the connecting rods.

7. Opening element according to one of Claims 1 to 6, **characterized in that** it is provided with a system for locking the opening element in the open position.

8. Vehicle **characterized in that** it is provided with an opening element according to one of Claims 1 to 7, in which the opening element (3) is placed at the rear end of the vehicle, its transverse edge directed toward the rear of the vehicle being adjacent to the top edge of an opening transverse vertical side wall (2) of the vehicle, and in which the means for guiding in longitudinal and vertical movement are placed on the side of the front transverse edge of the roof opening and of the opening element, the connecting rod(s) (10) being articulated on the end of the opening element (3) directed toward the rear so that a movement of the opening element from the rear toward the front of the vehicle vacates access to the opening (4).
